# EUROPEAN PATENT APPLICATION

(11) **EP 2 106 986 A1**
(43) Date of publication of application: **07.10.2009**
(21) Application number: 08170732.5
(22) Date of filing: 04.12.2008
(51) Int. Cl.: B62B 5/04, B62B 9/08

(54) **Manual drive vehicle**

(30) Priority: 02.04.2008 ES 200800659 U
(71) Applicant: Luque Frias, Andrés, 08393 Caldes d'Estrac (ES); Collados Crisol, Julio, 08393 Caldes d'Estrac (ES)
(72) Inventor: Luque Frias, Andrés, 08393 Caldes d'Estrac (ES); Collados Crisol, Julio, 08393 Caldes d'Estrac (ES)
(74) Representative: Manresa Val, Manuel

(57) **Abstract**

A manual drive vehicle comprises a handle area for the vehicle user driver, a brake device, a sensor device that detects the presence of the user's hands on the handle area, a power source (51), with the brake device comprising a stable, non- energised position, in which the device blocks movement of the vehicle's wheels (11), together with an energised position in which the wheels (11) are unblocked, with the power source (51) and brake device being connected together by a control device governed by the cited presence sensor device, so that the power source (51) energises the brake device when the sensor device detects the user's hands wherein the brake device consists of a servomotor (50) comprising self-contained power supply means (51) and a rod (52) that connects the brake to the servomotor (50).

## Description

Manual drive vehicle comprising a handle area for the vehicle user driver, a brake device, a sensor device that detects the presence of the driver's hands on the handle area, a power source, with the brake device comprising a stable, non-energised position, in which the device blocks movement of the vehicle's wheels, together with an energised position in which the wheels are unblocked, with the power source and device being connected together by a control device governed by said presence sensor so that the power source energises the brake device when the sensor device detects the user's hands, where the brake device comprises self-contained power supply means and a rod that connects the brake to the servomotor.

### BACKGROUND OF THE INVENTION

The inventors are well known in the sector for having made advances in children's pushchairs, transport carriages, shopping trolleys and manual drive vehicles.

Thus, Spanish Patent 200701701 (ES2285964), "VEHICULO A RUEDAS DE TRACCIÓN MANUAL", of 2007, is known, in the name of Mr Andrés Luque Frias and Mr Julio Collados Crisol, which refers to a manual drive vehicle, fitted with a handle area for the pushchair user driver and a brake device, characterised in that the vehicle has a sensor device that detects the presence of the user driver's hands in the handle area and a power source and because the brake device has a stable non-energised position, in which the device blocks pushchair wheel movement, together with an energised position, in which the wheels are unblocked, with the power source and device being connected together by a control device governed by cited presence sensor, so that the power source energises the brake when the sensor device detects the user's hands, which forms the base of this invention.

Spanish Utility Model 8700805 (ES1001877), in the name of the company INDUSTRIAS ONETO, S.A., from 1987, is also known, which refers to a brake applicable to manual trolleys, characterised in that the handle or handlebar has an articulation that transmits a force, causing the unblocking of a brake that retains the trolley heels immobile, because the movement of the handlebar with respect to the trolley to apply wheel unblocking is in the vertical direction, making it necessary to apply a force in the vertical direction in addition to that of actual trolley movement in order to enable this to move.

Finally, Spanish Utility Model 9502203 (ES1031894) from 1995, in the name of FEDERICO GINER, S.A. should also be pointed out, which refers to a device operating the brake in baggage trolleys, being of the type that incorporates a brake plate that applies pressure to each of the rear wheels on a baggage trolley through the action of a spring, with this brake plate connected to the lower end of a vertical rod, the upper end of which articulates with an intermediate part that is firmly connected to an upper handle, characterised in that the intermediate part articulates with a lateral plate that is firmly connected to the trolley structure; also with a stop retaining part for the intermediate when this is tilted when the upper handle is pressed to free each rear wheel from the brake plate.

### DISCLOSURE OF THE INVENTION

This invention is an improvement in the sector for safety of children's pushchairs, small transport trolleys, shopping trolleys and manual drive vehicles in general.

The inventors have developed a new brake device that makes impossible for the manual drive vehicle to move against the user's wishes, in other words, that it can move due to user carelessness.

In addition to the previously cited advantage, this device can be installed on most existing children's pushchairs and on almost all transport trolleys, shopping trolleys and manual drive vehicles, since it is very easy to install and handle.

At the same time, because it is a rechargeable self-contained device, it incorporates safety means to prevent incorrect operation if the battery level is low or they are run down.

This device is installed next to the brakes fitted to children's pushchairs, transport trolleys, shopping trolleys and manual drive vehicles and operates said brake when it receives information that the hands are no longer on the sensors, such as the one described in Spanish Patent 200701701 (ES2285964) from the same inventors.

Thus, when the user's hands are no longer detected by the presence detectors, said information is sent to the servobrake, which moves the rod that operates the brake and immobilises the pushchair, transport trolley, shopping trolley or manual drive vehicle.

When the hands are replaced on said sensors, the servomotor operates in the opposite sense and moves the rod to operate the brake freeing the pushchair, transport trolley, shopping trolley or manual drive vehicle.

One objective of this invention is a manual drive vehicle, comprising a handle area for the vehicle user driver, a brake device, a sensor device to detect the presence of the user driver's hands in the handle area, a power source, comprising the brake device a stable, non-energised position, in which the device blocks movement of the vehicle's wheels, together with an energised position in which the wheels are unblocked, with the power source and device being connected together by a control device governed by said presence sensor so that the power source energises the brake device when the sensor device detects the user's hands, characterised in that the brake device consists of a servomotor comprising self-contained power supply means and a rod that connects the brake to the servomotor.

### BRIEF DESCRIPTION OF THE DRAWINGS

In order to facilitate the description, this report is accompanied by a sheet of drawings that represents a practical exemplary embodiment for guideline purposes only and which does not limit the scope of this invention:

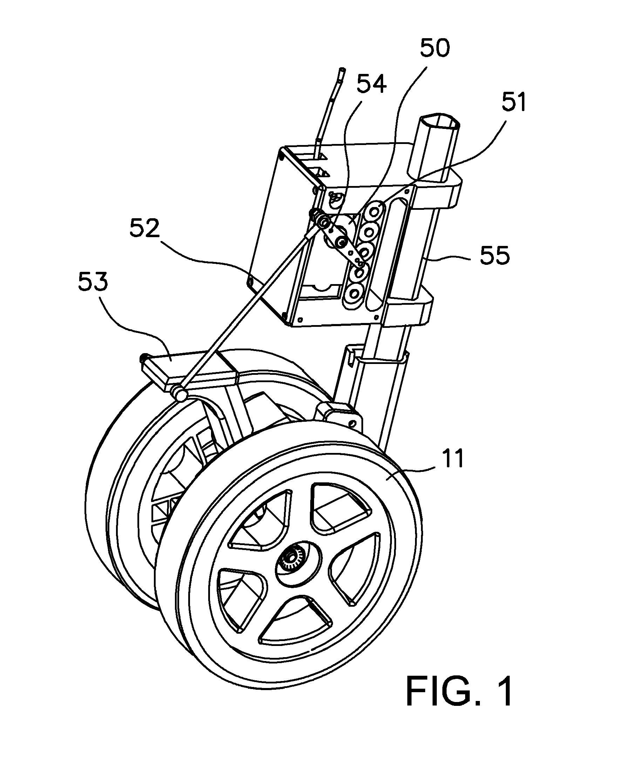

- Figure 1 is a detailed view of the brake device, without the battery compartment cover and in the non-braked position.

### SPECIFIC EXEMPLARY EMBODIMENT OF THE REQUESTED PATENT

Figure 1 illustrates a servomotor 50, self-contained power supply means 51, a leg 55, wheels 11, a rod 52, flat bar 54 and pedal 53.

Thus, in a specific exemplary embodiment, this invention is installed on one of legs 55 of the vehicle on which it is to operate.

While the user has his hands on the presence sensor, just as described in Patent ES2285964, servomotor 50, fed from the power supply means 51, in this case batteries, does not operate brake pedal 53 on the wheels 11, so that the children's pushchair, transport trolley, shopping trolley or manual drive vehicle (a pushchair in this case) can be pushed and moved.

If the hands are removed from the sensors, said information will be sent to servomotor 50, which will more flat bar 54 (while it can still directly operate rod 52) which, in turn, operates rod 52 pushing brake pedal 53 to detain the trolley.

When the hands are once again detected on the sensors, the reverse movement is produced, servomotor 50 once again operates flat bar 54, in turn operating rod 52, moving the brake pedal 53 to free the pushchair so that it can be pushed.

This patent describes a new manual drive vehicle. The exemplary embodiments mentioned here do not limit this invention and can have various applications and/or adaptations, all within the scope of the following claims.

## Claims

1. A manual drive vehicle, comprising a handle area for the vehicle user driver, a brake device, a sensor device that detects the presence of the user's hands on the handle area, a power source, with the brake device comprising a stable, non-energised position, in which the device blocks movement of the vehicle's wheels, together with an energised position in which the wheels are unblocked, with the power source and device being connected together by a control device governed by the cited presence sensor device, so that the power source energises the brake device when the sensor device detects the user's hands **characterised in that** the brake device consists of a servomotor (50) comprising self-contained power supply means (51) and a rod (52) that connects the brake to the servomotor (50).

2. A vehicle in accordance with claim 1 **characterised in that** the brake is operated by a pedal (53) and the rod (52) joins said pedal (53) to servomotor (50).

3. A vehicle in accordance with claim 1 **characterised in that** between servomotor (50) and rod (52) articulates a flat bar (54).
